# EUROPÄISCHE PATENTSCHRIFT

(11) **EP 1 144 530 B1**
(45) Veröffentlichungstag und Bekanntmachung des Hinweises auf die Patenterteilung: **27.09.2006**
(21) Anmeldenummer: 99932771.1
(22) Anmeldetag: 01.07.1999
(51) Int. Cl.: C09J 103/00, C09J 103/02, C09J 105/04, C09J 101/26, C09J 105/00, C09J 189/00, C09J 129/04

(54) **WÄSSRIGE KLEBEMITTELDISPERSIONEN UND DEREN VERWENDUNG ZUR HERSTELLUNG VON MEHRLAGIGEN PAPIEREN**
AQUEOUS ADHESIVE DISPERSIONS AND THE USE THEREOF IN THE PRODUCTION OF MULTI-LAYERED PAPER
DISPERSIONS ADHESIVES AQUEUSES ET LEURS UTILISATIONS POUR LA FABRICATION DE PAPIERS MULTICOUCHES

(30) Priorität: 03.07.1998 DE 19829757
(43) Veröffentlichungstag der Anmeldung: 17.10.2001
(73) Patentinhaber: Ahlstrom Osnabrück GmbH, 49090 Osnabrück (DE)
(72) Erfinder: WERRES, Joachim, D-49457 Drebber (DE); REINHARDT, Bernd, D-49090 Osnabrück (DE); RIENÄCKER, Klaus, D-49078 Osnabrück (DE)
(74) Vertreter: Eisenführ, Speiser & Partner
(86) Internationale Anmeldenummer: PCT/EP1999/004542
(87) Internationale Veröffentlichungsnummer: WO 2000/001783

(56) Entgegenhaltungen:
- WO-A-96/23038
- DE-A- 1 809 824
- FR-A- 1 282 904
- CHEMICAL ABSTRACTS, vol. 128, no. 19, 11. Mai 1998 (1998-05-11) Columbus, Ohio, US; abstract no. 231786, "Odorless water-resistant corrugator adhesives with good curability and workability" XP002120704 & JP 10 088090 A (HONEN CORP.) 7. April 1998 (1998-04-07)
- DATABASE WPI Week 199338 Derwent Publications Ltd., London, GB; AN 1993-297883 XP002120705 "water resistant adhesive compsn. for corrugated board - contains specific amt. of cationic watersoluble polyamide resin and starch" & JP 05 209159 A (HOHNEN OIL CO LTD), 20. August 1993 (1993-08-20)

## Beschreibung

Die Erfindung betrifft wässrige Klebemitteldispersionen und Verfahren zur Herstellung von mehrlagigen Papieren, Pappe und Karton mit verbesserter Schicht- und Lagenfestigkeit unter Verwendung dieser Klebemitteldispersionen..

Mehrlagige Papiere werden aus Papierstoffmischungen mit gleicher oder unterschiedlicher Zusammensetzung durch Zusammenpressen (Gautschen) der nassen Papierbahnen erhalten. Die Qualität mehrlagiger Verpackungspapiere oder Kartons wird wesentlich durch die innere Festigkeit der Materialien bestimmt, wobei jedoch der Zusammenhalt im Grenzbereich zwischen den einzelnen Papierlagen eine Schwachstelle darstellt. Deshalb werden oft klebefähige Stärke oder Stärkederivate zur Verbesserung der Schicht- und Lagenfestigkeit verwendet. Unter Ein-wirkung größerer Scherkräfte, von Wärme oder erhöhter Feuchtigkeit bei der Lagerung und Weiterverarbeitung kann jedoch auch bei so hergestellten Produkten die Stabilität verlorengehen und das Material aufspalten.

Bisher werden als Klebemittel native oder modifizierte Stärke in Form einer wässrigen Dispersion auf oder zwischen die Papierlagen gesprüht, die in der Trockenpartie der Papiermaschine verkleistern und auf diese Weise eine Verklebung der Lagen bewirkt. Die auf diese Weise erzielte Schicht- und Lagenfestigkeit ist jedoch oft begrenzt, insbesondere, wenn bei nachfolgender Wärmeeinwirkung der Stärkeverbund ganz oder teilweise irreversibel versprödet. Die Verwendung nativer Stärke hat nach F. Andruchovici und R. Wilken, PTS-Verlag München, 1994, PTS-Forschungsbericht, PTS-FB 09/93, S. 19 den Nachteil, daß sie durch ihr rheologisches Verhalten in wässriger Lösung (hohe Viskosität) nur mit geringem Feststoffgehalt eingesetzt werden kann. Die ausschließliche Verwendung kationischer Stärke ist wieder aus Kostengründen nachteilig.

Gemäß EP-B-310 078 wird zur Herstellung von Wellpappe eine viskositätsstabile Klebstoffzusammensetzung auf der Basis von gelierter und teilchenförmiger Stärke verwendet, die zusammen mit einem basisch reagierenden polymeren Verdickungsmittel, wie einem Aceton-Formaldehyd-Harz, als wässrige Dispersion eingesetzt wird.

Aus DE-A-44 01 529 ist für die Wellpappenherstellung ein konzentrierter Stärkeleim bekannt, der zur Herabsetzung seiner Viskosität ein ionisches Tensid enthält.

Nach EP-B-415 385 wird die Oberflächen-, Bahn- und Spaltfestigkeit von Papier und Pappe durch Besprühen der nassen Papierbahnen mit einer Aufschlämmung von nicht gelierten Stärkekörnern erzielt, die eine Geliertemperatur von 35 - 55 °C besitzen und die zuvor durch Erhitzen einer Mischung von Rohstärke, Harnstoff, Phosphorsäure oder einem Phosphat auf eine Temperatur von 80 - 150 °C während der Dauer von 0,5 bis 5 Std. erhalten wurden.

Aus EP-A-742 316 sind weitere Papier-Leimungsmittel bekannt, die vorzugsweise mit ungesättigten Dicarbonsäuren oder -Anhydriden veresterte, kationisierte Stärke enthalten.

Diese bekannten Klebemittel sind nur mit großem technischen Aufwand herzustellen und weisen für viele Anwendungen eine unzureichende Klebewirkung auf.

Ebenso ist die von K. Sato in Japan Tappi Journal 49, 318 - 323 (1995), Nr. 2 beschriebene Verwendung von Polyacrylamid als Verfestigkeitsmittel anstelle von Stärke beim Sprühauftrag, wie dort angegeben, ungeeignet. Alternativ wird das Produkt in Form einer Lösung eingesetzt, die jedoch nach dem Aufsprühen nicht nur auf der Oberfläche der Papierbahn verbleibt, sondern in sie eindringt.

Weiterhin ist aus EP-B-555 093 ein Verfahren zur Herstellung eines abriebfesten, dekorativen Laminats bekannt, bei dem auf die oberste nasse Papierstoffschicht eine wässrige Aufschlämmung von Aluminumoxidteilchen und einem hochmolekularen, kationischen Retentionsmittel, wie Polyacrylamid, aufgetragen und dann der weiteren üblichen Papierherstellung unterworfen wird.

EP-B-606 431 beschreibt eine Zusammensetzung zum Beschichten von Pappe, die kationische Stärke und ein Vinylacetatpolymerisationsprodukt umfassen, die ebenfalls zusammen mit Pigmenten aufgebracht werden. Wie aber bekannt, werden an das Laminieren von Papierschichtstoffen andere Anforderungen gestellt als an die Herstellung von mehrlagigem Papier an sich.

Es bestand daher die Aufgabe, eine Klebemitteldispersion zur Verfügung zu stellen, mit der mehrlagiges Papier mit verbesserten Eigenschaften, insbesondere mit erhöhter Lagen- und Schichtfestigkeit, auf einfache Art und Weise hergestellt werden kann.

Die Aufgabe wird durch die Bereitstellung der erfindungsgemäßen, wässrigen Klebemitteldispersionen gelöst, die enthalten
A) 0,1 - 10 Gew.%, vorzugsweise 2 - 6 Gew.%, bezogen auf das Gesamtgewicht der Dispersion, eines klebefähigen Polymeren in dispergierter Form
B) 0,1 -100 Gew.-Teile, vorzugsweise 0,1 - 20 Gew.-Teile, besonders bevorzugt 0,1 - 10 Gew.-Teile, bezogen auf 100 Gew.-Teile der Komponente A), wenigstens eines anionischen oder kationischen Polyelektrolyten und
C) 0 - 50 Gew.-Teile, vorzugsweise 0,1 - 30 Gew.-Teile, besonders bevorzugt 0,1 - 20 Gew.-Teile, bezogen auf 100 Gew.-Teile der Komponente A), wenigstens eines Polyalkylenglykols mit einer Molmasse im Bereich von 200 - 100 000 g/mol.

Als Komponente A) wird wenigstens ein natürliches oder synthetisches klebefähiges Polymeres, vorzugsweise ein Polysaccharid, ein ggf. modifiziertes Polysaccharid, ein Protein und/oder ein Polyvinylalkohol eingesetzt, das in der Dispersion in dispergierter Form vorliegt; d. h. nicht über seine jeweilige Verkleisterungstemperatur erhitzt wurde.

Besonders bevorzugt werden als klebefähige Polymere Stärke, modifizierte Stärke, Celluloseether, wie Carboxymethylcellulose, Polyvinylalkohole, Alginate, Proteine, wie Glutin oder Casein und/oder Guarmehl eingesetzt. Aus wirtschaftlichen Gründen werden jedoch Stärke und/oder Stärkederivate bevorzugt.

Dabei werden native Stärke, wie Kartoffelstärke, Weizenstärke, Maisstärke, Reisstärke, Erbsenstärke und/oder deren Mischungen, modifizierte Stärken, wie Stärkeabbauprodukte, insbesondere Dextrine, chemisch-modifizierte Stärken, wie substituierte Stärkederivate und insbesondere anionische Stärken, wie Dialdehydstärke, Carboxystärke und durch Persulfat abgebaute Stärke, anionische Stärkeester, wie z. B. Stärkephosphorsäuremono- oder -diester, Stärkeacetate und Stärkecitrate, anionische Stärkeether, wie z. B. Carboxymethylstärke und Carboxymethyl-2-hydroxyethyl-stärke und Carboxymethyl-3-hydroxy-propyl-stärke und kationische Stärkederivate, wie z. B. N-haltige Stärkeether, insbesondere Stärken mit primären oder sekundären Amino- oder Iminogruppen und tertiären Aminogruppen, die durch Protonierung mit Säuren positiv geladen sind, und quatäre Ammoniumgruppen enthalten, eingesetzt.

Der erfindungsgemäß als Komponente B) einzusetzende kationische oder anionische Polyelektrolyte sind aus der Gruppe der synthetischen oder ggf. modifizierten, natürlichen Polymerisate ausgewählt. Vorzugsweise sind es wasserlösliche oder wasserquellbare kationische oder anionische synthetische Homo- oder Copolymerisate von monoethylenisch ungesättigten Monomeren mit Säuregruppen, die zumindest teilweise als Salze vorliegen oder deren Ester mit Di-C₁-C₂-alkylamino-C₂-C₆-alkylalkoholen oder deren Amide mit Di-C₁-C₂₋alkylamino-C₂-C₆-alkylaminen, die jeweils in protonierter oder quaternierter Form eingesetzt werden, wie sie beispielsweise in EP-A-0 013 416 oder in EP-A 0 113 038 angegeben sind, und ggf. weiteren monoethylenisch ungesättigten Monomeren.

Diese Polyelektrolyte zeichnen sich dadurch aus, daß sie unterhalb der Verkleisterungstemperatur der Komponente A) nicht als deren Flockungsmittel wirken, sondern mit A) stabile wässrige Dispersionen bilden.

Als kationisch wirksame Polyelektrolyte können vorzugsweise Homopolymerisate oder Copolymerisate aus wasserlöslichen, monoethylenisch ungesättigten Vinylverbindungen, wie Acrylsäure- und Methacrylsäureester von Dialkylaminoalkylalkoholen in protonierter oder quaternierter Form, wie beispielsweise Dimethylaminoethylacrylat, Acrylsäure- und Methacrylsäureamide von Dialkylaminoalkylaminen, in protonierter oder quaternierter Form, wie Acrylamidopropyltrimethylamoniumchlorid und/oder Acrylamidopropyltrimethylamonium-methyl-methosulfat verwendet werden.

Weiterhin sind als kationische Polyelektrolyte Mannichbasen von acrylamidhaltigen Polymerisaten, Polyvinylamine, Polyamine, wie Diethylenamin, Dipropylentriamin, Triethylentetramin und Polyalkylenpolyamine (Polyethylenimine) mit Molmassen von 450 - 100 000 g/mol, vorzugsweise flüssige oder in Wasser gelöste Polyalkylenpolyamine mit Molmassen im Bereich von 450 - 20 000 g/mol, geeignet. Sofern die erfindungsgemäßen Dispersionen keine Komponente C enthalten, kommen beim Einsatz von Polymerisaten als kationische Polyelektrolyte nur Polymerisate in Frage, die keine Aldehyd- oder Methylol-Gruppen als funktionelle Gruppen enthalten. Als anionische Polyelektrolyte sind vorzugsweise Homo- und/oder Copolymerisate von monoethylenischen ungesättigten Carbonsäuren und Sulfonsäuren, wie Acrylsäure, Methacrylsäure, Maleinsäure, Itaconsäure, Crotonsäure und/oder deren Alkali-, vorzugsweise Natrium-, Kalium- oder Ammoniumsalze, Vinylsulfonsäure, Acrylamido- und Methacrylamidoalkylsulfonsäuren, wie 2-Acrylamido-2-methylpropansulfonsäure, 2-Sulfoethylmethacrylat und Styrolsulfonsäure und/oder deren Alkali-, vorzugsweise Natrium- oder Kalium- oder Ammoniumsalze geeignet.
Weiterhin sind Vinylphosphonsäure und Styrolphosphonsäure sowie deren Alkalisalze, vorzugsweise Natrium- oder Kalium- oder Ammoniumsalze geeignet.
Die Copolymerisate können aus den genannten ionischen Monomeren und nicht-ionogenen, wasserlöslichen, monoethylenisch ungesättigten Monomeren, wie Acrylamid, Methacrylamid, N-C₁-C₂ alkylierte (Meth)acrylamide sowie mit N-Vinylamid, Vinylformamid, N-Vinylacetamid, N-Vinyl-N-methylacetamid, N-Vinylpyrrolidon gebildet werden. Geeignete wasserlösliche Monomere sind außerdem N-Methylolacrylamid, N-Methylol-methacrylamid sowie die mit einwertigen C₁- bis C₄-Alkoholen partiell oder vollständig veretherten N-Methylol(meth)acrylamide und Diallyldimethylammoniumchlorid.

Ebenso können die Copolymerisate in begrenztem Maße in Wasser schwer lösliche und/oder wasserunlösliche, ethylenisch ungesättigte Monomere, wie (Meth)acrylsäurealkylester und Vinylacetat enthalten, soweit die Löslichkeit oder Quellbarkeit der Copolymerisate in Wasser erhalten bleibt.

Die Polymerisate können darüberhinaus unter Einsatz von vernetzenden, mindestens zweifach reaktionsfähigen Monomeren, vorzugsweise zweifach ethylenisch ungesättigten Monomeren hergestellt werden, so daß sie in Wasser quellbar oder nur begrenzt löslich sind, oder aus wasserlöslichen und wasserquellbaren Polymerisaten bestehen.

Weiterhin können erfindungsgemäß wasserlösliche oder wasserquellbare, aus kationischen und anionischen Monomeren gebildete, amphiphile Copolymerisate verwendet werden.

Als Komponente B) sind weiterhin Melamin-Formaldehyd-Kondensationsprodukte und Harnstof-Formaldehyd-Kondensationsprodukte in anionischer und kationischer Modifizierung, Polyamidoamin-Epichlorhydrin-Harze, wie die Umsetzungsprodukte von Adipinsäure mit Dieethylentriamin oder ähnlichen Aminen und Epichlorhydrin geeignet.

Die erfindungsgemäß zum Einsatz kommenden Polyelektrolyte können als Pulver, Dispersion oder Lösung, vorzugsweise als wässrige Lösung mit den klebefähigen Polymeren vermischt werden.

Das Gewichtsverhältnis der Mengenanteile der Komponenten A) und B), bezogen auf die Gesamtmenge der Komponenten A) und B), liegt bevorzugt im Bereich von 4 : 1 bis 25 : 1, besonders bevorzugt im Bereich von 10 : 1 bis 25 : 1 und insbesondere bevorzugt im Bereich von 14 : 1 bis 20 : 1.

Weiterhin können die erfindungsgemäßen Klebemitteldispersionen zusätzlich andere Additive, wie Tenside, Naßfestmittel, Leimungsmittel, hygroskopische Mittel und Pigmente enthalten.

Die erfindungsgemäßen Klebemitteldispersionen werden durch Zusammenbringen der Polymer- und Polyelektrolytkomponenten hergestellt, wobei die Komponenten in beliebiger Reihenfolge, portionsweise oder kontinuierlich in wässriger Phase, vorzugsweise als wässrige Dispersion in ein Gefäß gegeben, durch Rühren oder Umpumpen gemischt und ggf. bis unterhalb der Verkleisterungstemperatur der Komponente A) erwärmt werden. Dabei wird vorzugsweise das klebefähige Polymer A) auf eine Temperatur unterhalb der Verkleisterungstemperatur, nämlich auf 30 - 55 °C, vorzugsweise 35 - 50 °C, besonders bevorzugt 40 - 45 °C, erwärmt und dabei oder nachfolgend mit einer Lösung oder Dispersion des Polyelektrolyten gegebenenfalls gleicher oder gegebenenfalls entgegengesetzter Ionogenität versetzt. Ggf. kann die Dispersion bei der maximalen Temperatur unterhalb der Verkleisterungstemperatur noch für eine bestimmte Dauer gewärmt werden.

Der Zusatz von Polyalkylenglykol zur Dispersion kann als solcher oder in Form einer wässrigen Lösung der Polyalkylenglykole vor oder nach dem Zusatz der Komponente A) oder vorzugsweise nach dem Zusatz der Komponente B) erfolgen. Die Erwärmung der Dispersion, insbesondere die Dauer und der pH-Wert der wässrigen Dispersion sind für den Fachmann durch einfache Versuche in Abhängigkeit von den verwendeten Rohstoffen und den gegebenen apparativen Bedingungen festzustellen und werden so gewählt, daß die Verkleisterungstemperatur der Komponenten nicht überschritten wird. Durch die Zugabe der Polyelektrolyten B) zur Komponente A) und die Erwärmung der Dispersion bleibt der Zustand der homogenen Dispersionen erhalten.

Die Erwärmung der Dispersion kann auch in der Weise erfolgen, daß die Komponenten einzeln erwärmt bzw. in vorgewärmtes Wasser eingetragen werden.

Die Herstellung von mehrlagigem Papier ist bekannt. Sie erfolgt mit Hilfe von Papiermaschinen, die mit Mehrlagensiebpartien ausgestattet sind, auf denen mehrere Papierbahnen gebildet werden. Hierzu werden in bekannter Weise angeordnete Rundsiebe, Rundsiebformer oder als Blattbildungssystem eine Langsiebpartie, bestehend aus, beispielsweise 2 bis 6, Langsieben verwendet. Die auf den Siebpartien gebildeten Papierbahnen werden dann im nassen Zustand mit dem erfindungsgemäßen Klebemitteldispersionen behandelt, wobei das Klebemittel auf mindestens eine Papierbahn aufgebracht wird, die Bahnen zusammengebracht und nachfolgend zu einer stärkeren Bahn vereinigt werden. Beim nachfolgenden Durchlaufen der Trockenpartie erfolgt mit Hilfe der Klebemitteldispersion die endgültige Verklebung der Papierbahnen.

Der Auftrag des Klebemitteldispersion auf mindestens eine der nassen Papierbahnen kann unter Anwendung der bekannten, beispielsweise in F. Andruchovici und R. Wilken, PTS-Verlag München, 1994, PTS-Forschungsbericht, PTS-FB 09/93, S. 16 angegebenen Applikationstechniken vorgenommen werden. Gegenüber dem mit- oder gegenläufigen Dosierwalzenauftrag ist erfindungsgemäß insbesondere die Sprühtechnik bevorzugt, wobei die Benetzung der Papierbahn vollflächig oder, beispielsweise durch Schablonen begrenzt, erfolgen kann. Um eine ausreichende Sprühfähigkeit der Klebemitteldispersion zu erreichen, werden als Komponente B) vorzugsweise wasserlösliche Polymerisate mit einem Molekulargewicht MG (g/mol) von 1000 - 2 Mio., vorzugsweise von 1000 - 100 000 und besonders bevorzugt von 1000 - 50 000, eingesetzt. Entsprechende Polymerisate werden in - bekannter Weise durch Einstellung der Polymerisationsbedingungen unter Verwendung geeigneter Initiator- und Reglerkombinationen erhalten. Weiterhin ist es möglich, von hochmolekularen Polymerisaten auszugehen und diese vor dem Zusammengeben mit der Komponente A) einem mechanischen Abbau, beispielsweise durch Scheren der wässrigen Lösung, zu unterwerfen.

Die erfindungsgemäßen Klebemitteldispersionen zeichnen sich durch eine ausgezeichnete Lagerfähigkeit dispergiert in wässriger Phase aus.

Beim Auftragen der erfindungsgemäßen Klebemitteldispersionen lagern sich die dispergierten Antiele an der Oberfläche bzw. im oberen Faserbereich der Papierbahn ab. Die zusammengefügten nassen Papierbahnen durchlaufen dann die Pressenpartie und anschließend die Trockenpartie der Papiermaschine, wobei unter den dort herrschenden Bedingungen die Verklebung der behandelten Papierbahnen zum mehrschichtigen Papier erfolgt.

Ein weiterer Gegenstand der vorliegenden Erfindung sind daher auch Verfahren zur Herstellung von mehrlagigen Papieren und anderen aus Papierstoff bestehenden flächigen, aus mindestens 2 Papierbahnen gebildeteten Werkstoffen unter Einsatz der erfindungsgemäßen Klebemitteldispersionen, insbesondere zur Herstellung von Verpackungspapier, Wellpappe, mehrbahniger Vollpappe, Karton und mehrlagigem Testliner sowie von Tapetenrohpapier und anderen mehrlagigen Spezialpapieren, die sich durch eine Verbesserung ihrer Stabilität und Festigkeit insbesondere in bezug auf die Schicht- und Lagenfestigkeit auszeichnen.

Dabei werden vorzugsweise 1 bis 10 Gew.%, besonders bevorzugt 4 bis 8 Gew.%, bezogen auf die Papierproduktion, erfindungsgemäße wässrige Dispersion verwendet.

Die Erfindung wird ohne Einschränkung durch die nachfolgenden Beispiele weiter erläutert:

Hierbei ist die Lagenfestigkeit der Meßwert der Festigkeit zwischen einer Außenlage und den verbleibenden anderen Lagen des Papieres.

Die Schichtfestigkeit ist der Meßwert in der Mitte eines mehrlagigen Papieres bei symetrischem Aufbau.

Die Meßwerte werden durch Auftrennen und nachfolgendem Auseinanderziehen der Papierlagen mit einem Zugfestigkeitsprüfer gemäß ASTM F 904-91 erhalten.

### Vergleichsbeispiel 1

Die Herstellung eines mehrlagigen Spezialpapiers aus Zellstoff erfolgt auf einer Papiermaschine mit 4 Rundsieben, wobei ein Rohpapier mit einem Flächengewicht von ca. 270 g/m² aus Lagen mit einem Gewicht von 60 - 70 g/m² erzeugt wird. Zur Erhöhung der Schicht- und Lagenfestigkeit wird eine 2 %ige wässrige Stärkedispersion, die kontinuierlich im Dispergierbehälter aus einer kationischen Stärke mit der Bezeichnung Emcat® C 12 (Fa. Emsland Stärke) hergestellt wird, in einer Menge von 6 Gew.%, bezogen auf die Papierproduktion, jeweils zwischen die nassen Papierlagen gesprüht. Nach dem Durchlauf des Papierbandes durch die Trockenpartie wird ein Rohpapier mit einer Lagenfestigkeit von 1,735 N/cm und einer Schichtfestigkeit von 1,559 N/cm erhalten.

### Beispiel 1

Die Herstellung eines mehrlagigen Spezialpapiers erfolgt in der gleichen Weise wie im Vergleichsbeispiel 1 beschrieben, wobei statt der kationischen Stärke eine anionische Kochstärke mit der Bezeichnung Retamyl® AP (Fa. AVEBE) und das kationische Praestafix® HH (Fa. Stockhausen GmbH & Co. KG) verwendet werden. Die Dispersion wird hergestellt, in dem die anionische Kochstärke in Wasser dispergiert und das kationische Polymerisat in einer Menge von 6 Gew.Teile bezogen auf die Stärke, unter Rühren dem Dispergierbehältern zugesetzt wird. Die wässrige Dispersion wird im Dispergierbehälter erwärmt und bei einer gleichbleibenden Temperatur von 40 - 45 °C gehalten. Die Dispersion wird in einer Menge 6 Gew.%, bezogen auf die Papierproduktion, zwischen die Lagen der nassen Papierbahnen gesprüht. Nach der Trocknung wird ein Rohpapier mit einen Lagenfestigkeit von 1,900 N/cm und einer Schichtfestigkeit von 1,640 N/cm erhalten.

Bei nachfolgenden Verarbeitungsschritten des Spezialpapiers erfolgt eine erneute Erwärmung der Papierbahn, die bisher üblicherweise eine Versprödung einer ausschließlich aus Stärke bestehenden Klebschicht zur Folge hat. Der Vorgang wird durch einen Test simuliert, bei dem die Papierprobe während 30 Minuten auf 130 °C erwärmt und gehalten und die Schichtfestigkeit unmittelbar nach dieser Wärmebehandlung gemessen wird. Anschließend wird die Probe unter Normalbedingungen bei 23 °C und 50 % relativer Luftfeuchtigkeit reklimatisiert. Die Änderung der Papiereigenschaften während des Vorgangs wird durch Festigkeitsmessungen verfolgt. Die Untersuchungsergebnisse der Papierproben des Vergleichsbeispiels 1 und des Beispiel 1 sind in der Tabelle 1 zusammengefaßt.

**Tabelle 1**

| **Veränderung der Schichtfestigkeit [N/cm] vor und nach Erwärmung sowie nach Reklimatisierung der Probe** | | | | | | |
|---|---|---|---|---|---|---|
| **Probe** | **sofort** | **30 min/ 130 °C** | **Festigkeits -verlust (%)** | **Reklim. 5 min** | **Reklim. 15 min** | **Reklim. 30 min** |
| **Vergleich-** | 1,700 | 0,760 | 55,3 | 1,265 | 1,600 | 1,665 |
| **Beispiel 1** | 1,770 | 0,840 | 52,5 | 1,330 | 1,625 | 1,735 |
| ∅ | 1,735 | 0,800 | 53,9 | 1,2975 | 1,613 | 1,700 |
| | 1,865 | 1,025 | 45,0 | 1,365 | 1,665 | 1,770 |
| **Beispiel 1** | 1,935 | 1,095 | 43,4 | 1,400 | 1,600 | 1,865 |
| ∅ | 1,900 | 1,060 | 44,2 | 1,383 | 1,633 | 1,818 |

Das Papier gemäß Beispiel 1 weist eine hohe Schichtfestigkeit auf, die auch nach der Erwärmung erhalten bleibt, da durch den Einsatz der erfindungsgemäßen Klebemitteldispersionen ein Verspröden des Klebemittels verhindert wird.

### Beispiele 2 bis 7 und Vergleichsbeispiel 2

Im Laborversuch wurden aus einem Faserstoffgemisch mit einem Gehalt von 3 Gew.% Trokkensubstanz nach Verdünnung mit Leitungswasser auf 1 Gew.% auf dem Blattbildner zwei Blätter mit jeweils 100 g/m² hergestellt. Ein nasses Blatt wurde jeweils auf Chromokarton gelagert während jeweils das zweite nasse Blatt auf dem Blattbildungssieb mit 10 g einer 2 Gew.%igen Klebemitteldispersion durch Besprühen aus einer Sprühflasche behandelt wurde.

Die Klebemitteldispersion wurde für das Vergleichsbeispiel 2 zuvor aus einer kationischen Stärke, Produktbezeichnung Emcat® C 12 (Fa. Emsland-Stärke), für die Beispiele 2 bis 7 aus anionischen Stärken mit den Produktbezeichnungen Retamyl ® AP und Aniofax® AP 25 (beide Fa. AVEBE) und verschiedenen kationischen Polyelektrolyten hergestellt, wobei das Gewichtsverhältnis der Stärkekomponente zum kationischen Polyelektrolyten jeweils 16 : 1 betrug und die Mischung für 10 Minuten auf 30 bzw. 40 °C, erwärmt wurde.

Nach dem Sprühen wurden beide Blätter mit einer Rolle auf dem Sieb vergautscht und dann 15 Minuten im Vakuumtrockner bei 95 °C getrocknet. Es wurden jeweils 3 zweilagige Blätter mit einer Klebemitteldispersion hergestellt, an denen die Schichtfestigkeit nach einer Klimatisierung der Blätter bei 23 °C und 50 % relativer Luftfeuchtigkeit bzw. unmittelbar nach einer 30 Minuten dauernden Erwärmung im Trockenschrank auf 130 °C bestimmt wurde. Die Zusammensetzung der verwendeten Klebemitteldispersionen und die Meßdaten der Festigkeitsbestimmungen sind in Tabelle 2 dargestellt.

**Tabelle 2**

| | | **Temperatur (°C)** *nach Erwärmung **der Mischung*** | **Ausgangswert (klimat. Probe) N/cm** | **Probe nach Wärmebehandl. 30 min 130 °C N/cm** | **Verlust in %** |
|---|---|---|---|---|---|
| **Vergleichs-Beispiel 2** | Emcat® C 12 | 30 | 1,065 | 0,600 | 43,7 |
| **Beispiel 2** | Retamyl® AP + Praestafix® HH | 30 | 1,375 | 1,000 | 27,3 |
| **Beispiel 3** | Retamyl® AP + Polymin® SK¹⁾ | 40 | 1,530 | 1,135 | 25,8 |
| **Beispiel 4** | Retamyl® AP + Cartiofast® PL²⁾ | 40 | 1,665 | 1,200 | 27,9 |
| **Beispiel 5** | Retamyl® AP + Cartiofast® 8106³⁾ | 30 | 1,615 | 1,225 | 24,1 |
| **Beispiel 6** | Retamyl® AP + Cartafix® DPR⁴⁾ | 40 | 1,400 | 1,000 | 28,6 |
| **Beispiel 7** | Aniofax® AP 25 + Prestafix® HH | 40 | 1,330 | 0,865 | 35,0 |

| | | | | | |
|---|---|---|---|---|---|
| ¹⁾Polyethylenimin, modifiziert, hochmolekular, BASF AG ²⁾Polyethylenimin, hochmolekular, BASF AG ³⁾Polyvinylamin, MG ca. 300 000 g/mol, BASF AG ⁴⁾Polyamin, MG ca. 60 000 g/mol, SANDOZ Products Ltd. | | | | | |

### Beispiel 8 und Vergleichsbeispiel 3

Bei der Produktion von Testliner III, einer Papier- bzw. Wellpappenpapierklassifizierung des Europäischen Verbandes der Hersteller von Wellpappenpapier, mit einer Flächenmasse von 190 g/m² auf der Basis von Altpapier auf einer Langsiebpapiermaschine wurden die auf zwei Langsieben erzeugten nassen Papierbahnen bei einem Trockengehalt von 10 - 15 Gew.% mit einer wässrigen Klebemitteldispersion bestehend aus anionischer Stärke (Retamyl® AP) und dem kationischen Polymerisat Praestafix® HH wie zuvor im Verhältnis 16:1 besprüht. Die Komponenten wurden zu einer 2 Gew.%igen wässrigen Klebemitteldispersion gemischt und auf eine Temperatur von 40 °C erwärmt. Bei einer Produktion von 4 t/Std. wurden 20 kg/Std. Retamyl® AP und 5 kg/Std. Praestafix® HH in Vergleich mit 20 kg/Std. einer modifizierten Weizenstärke (Vergleichsbeispiel 3) kontinuierlich eingesetzt. Die behandelten Bahnen wurden zusammengeführt, bei einer Geschwindigkeit von 200 bis 250 m/min vergautscht und anschließend als eine Bahn verpreßt und getrocknet. An Produktionsproben wurden der Berstdruck gemäß ISO 2758 (1983) gemessen und die Spaltfestigkeit und das Wasserabsorptionsvermögen der Leimung (Cobb-Verfahren, ISO 535 (1991)) ermittelt. Die Meßdaten sind in Tabelle 3 dargestellt.

**Tabelle 3**

| **Testliner III, 190 g/m**^{**2**}**, PM 2 Duplex** | | | |
|---|---|---|---|
| | **Berstdruck [k Pa]** | **Spaltfestigkeit [J/m]** | **Wasserabsorption, g/m**^{**2**} **[Cobb 60 s]** |
| **Vergleichs-Beispiel 3** | 512 | 272 | 25 |
| **Beispiel 8** | 532 | 370 | 27 |

Neben der deutlichen Verbesserung der Spaltfestigkeit um 36 % wird ebenfalls die Berstfestigkeit positiv beeinflußt. Die Leimung (bzw. die Wasserabsorption) wird dagegen nicht signifikant verändert.

### Beispiel 9 bis 15 und Vergleichsbeispiel 4

Unter Verwendung eines Faserstoffgemisches mit einem Gehalt von 2,9 Gew.% wurden analog der Arbeitsweisen der Beispiele 2 bis 7 zweilagige Blätter unter Einsatz erfindungsgemäßer wässriger Klebemitteldispersionen hergestellt. Die Dispersionen wurden durch Erwärmen der Dispersion aus kationischer Stärke (Emcat® C 12) und dem kationischen Polymerisat Praestafix® HH bzw. dem kationischen Polymerisat Produkt A 6309 oder dem anionischen Copolymerisat aus Acrylamid und Natriumacrylat, Praestamin® AL (beide Fa. Stockhausen GmbH & Co. KG) bzw. durch Erwärmen der Dispersionen aus anionischer Stärke (Retamyl® AP) und den gleichen oben genannten Polyelektrolyten bzw. durch Erwärmen der Dispersion aus Mowiol® 28-99/G2 mit Praestafix® HH bzw. aus Walocel® XC 3.000 G mit Praestamin® AL erhalten. Jedes dieser Produkte wurde im Verhältnis 16 : 1, bezogen auf das Verhältnis klebefähiges Polymer zu Polyelektrolyt, eingesetzt. Das Vergleichsbeispiel 4 wurde analog Vergleichsbeispiel 2 mit Emcat® C 12 allein hergestellt.

Die Bestimmung der Schichtfestigkeit erfolgt wiederum nach Erwärmung im Trockenschrank auf 130 °C im Vergleich zu einer Papierprobe, die ausschließlich mit Emcat ® C 12 hergestellt worden war. Die Meßdaten sind in Tab. 4 dargestellt.

**Tabelle 4**

| | | **Temperatur (°C)** ***nach** Erwärmung der Mischung* | **Ausgangswert (klimat. Probe) N/cm 22 °C** | **Probe nach Wärmebehandl. 30 Minuten 130 °C N/cm** | **Verlust in %** |
|---|---|---|---|---|---|
| **Vergleichs-Beispiel 4** | Emcat ® C 12 | 30 | 0,800 | 0,425 | 46,9 |
| **Beispiel 9** | Retamyl® AP + Praestafix® HH | 40 | 1,735 | 1,265 | 27,1 |
| **Beispiel 10** | Retamyl® AP + Produkt A6309¹⁾ | 40 | 1,600 | 1,265 | 20,9 |
| **Beispiel 11** | Emcat® C 12 + Praestafix® HH | 40 | 0,760 | 0,535 | 29,6 |
| **Beispiel 12** | Emcat® C 12+ Produkt A6309¹⁾ | 40 | 0,720 | 0,495 | 31,3 |
| **Beispiel 13** | Emcat® C 12 + Praestamin® Al¹⁾ | 40 | 0,720 | 0,505 | 29,9 |
| **Beispiel 14** | Mowiol® 28-99/G2²⁾ Praestafix® HH | 40 | 1,200 | 0,865 | 27,9 |
| **Beispiel 15** | Walocel XC3.000G³⁾ Praestafix® HH | 40 | 1,530 | 1,200 | 21,6 |

| | | | | | |
|---|---|---|---|---|---|
| ¹⁾Stockhausen GmbH & Co. KG ²⁾Hoechst AG ³⁾Wolff Walsrode AG | | | | | |

### Beispiele 16 - 21 und Vergleichsbeispiele 5 - 10

Die Klebemitteldispersionen werden durch Eintragen der anionischen Stärke Retamyl® AP in Wasser unter Rühren hergestellt; das Wasser wurde zuvor auf 40 °C erwärmt. Nachfolgend erfolgt ebenfalls unter Rühren nacheinander der Zusatz von 0,125 Gew.% des kationischen Polymerisats Praestafix® HH und der Polyalkylenglykole, Polyglykol 300 (Fa. Contensio Chemicals GmbH) bzw. Polyglykol 10000S (Fa. Clariant GmbH).

Bei den Vergleichsbeispielen 5 - 10 wurde die Klebemitteldispersion aus der herkömmlich verwendeten kationischen Stärke Emcat® C12 mit den Zusätzen von Polyglykol 300 bzw. Polyglykol 10000S hergestellt.

Die ausschließliche Verwendung einer anionischen Stärke sowie einer Kombination einer anionischen Stärke mit Polyalkylenglykol bei der technischen Herstellung mehrlagiger Papiere ist nicht möglich, da es hierbei erfahrungsgemäß bereits auf der Papiermaschine zur Verschiebung der Papierlagen kommt.

Unter Verwendung eines Faserstoffgemisches mit einem Gehalt 2,9 Gew.% wurden analog zur Arbeitsweise der Bsp. 2 - 7 unter Verwendung dieser Klebemitteldispersionen zweilagige Blätter hergestellt.

Die Zusammensetzung der Klebemitteldispersionen und die ermittelten Daten der Schichtfestigkeit der mehrlagigen Blätter wurde bei 23 °C und nach der Behandlung der Blätter 30 min bei 130 °C sind in der folgenden Tabelle 5 zusammengefaßt. Die Mengenangaben in Gew.% beziehen sich jeweils auf die Trockenmasse des Faserstoffgemisches.

**Tabelle 5**

| **Beispiele** | | 23 °C N/cm | nach 30 min bei 130 ° N/cm |
|---|---|---|---|
| **16*** | 2,0% Retamyl® AP + 0,1 % Polygykol 300 | 1,840 | 1,310 |
| **17*** | 2,0% Retamyl® AP + 0,2 % Polygykol 300 | 2,065 | 1,375 |
| **18*** | 2,0% Retamyl® AP + 0,4 % Polygykol 300 | 1,775 | 1,200 |
| **19*** | 2,0% Retamyl® AP + 0,1 % Polygykol 1000S | 1,600 | 1,040 |
| **20*** | 2,0% Retamyl® AP + 0,2 % Polygykol 1000S | 1,385 | 0,935 |
| **21*** | 2,0% Retamyl® AP + 0,4 % Polygykol 1000S | 1,665 | 1,015 |

| **Vergleichs-Beispiele** | | | |
|---|---|---|---|
| **5** | 2,0% Emcat® C12 + 0,1 % Polygykol 300 | 0,735 | 0,455 |
| **6** | 2,0% Emcat® C12 + 0,2 % Polygykol 300 | 0,600 | 0,420 |
| **7** | 2,0% Emcat® C12 + 0,4 % Polygykol 300 | 0,600 | 0,395 |
| **8** | 2,0% Emcat® C12 + 0,1 % Polygykol 10000S | 0,600 | 0,380 |
| **9** | 2,0% Emcat® C12 + 0,2 % Polygykol 10000S | 0,655 | 0,385 |
| **10** | 2,0% Emcat® C12 + 0,4 % Polygykol 10000S | 0,505 | 0,400 |

| | | | |
|---|---|---|---|
| * + 0,125 Gew.% Praestafix® HH | | | |

### Beispiele 22 - 25

Weitere Klebemitteldispersionen wurden analog der Herstellungsweise der Beispiele 16 - 21 mit der anionischen Stärke Retamyl® AP hergestellt, wobei als Komponente B) neben dem kationischen Polymerisat Praestafix® HH zusätzlich ein modifiziertes MelaminFormaldehydharz in der Fa. Vianova Resins mit der Bezeichnung Madurit® MW114 30% WA TZ oder zusätzlich ein Polyamidamin-Epichlorhydrinharz in der Fa. BK Giulini Chemie, mit der Bezeichnung Giluton 1100/28 N, und diese Harze als Komponente B) jeweils allein mit Polyglykol 300, verwendet wurden. Die Zugabe von Polyglykol 300 erfolgte nach dem Zusatz der kationischen Polyelektrolyte zur in Wasser dispergierten Stärke.

Unter Verwendung eines Faserstoffgemisches mit einem Gehalt von 2,9 Gew.% wurden analog zur Arbeitsweise der Beispiele 2 - 7 mit diesen Klebemitteldispersionen zweilagige Blätter erstellt. Die Zusammensetzung der Klebemitteldispersionen und die Festigkeitsdaten sind in der Tabelle 6 dargestellt. Die Mengenangaben in Gew.% beziehen sich auf die Trockenmasse des Faserstoffs.

**Tabelle 6**

| **Beispiele** | | 23 °C N/cm | nach 30 min bei 130 °C N/cm | Verlust in % |
|---|---|---|---|---|
| **22** | 2 % Retamyl® AP/0,125 % Praestafix® HH + 0,2 % Madurit® MW 114 | 1,735 | 1,200 | 30,8 |
| **23** | 2 % Retamyl® AP/0,125 % Praestafix® HH + 0,1 % Giluton® N 1100/28 | 1,495 | 1,000 | 33,1 |
| **24** | 2 % Retamyl® AP/0,125 % Madurit® MW 114 + 0,2 % Polyglykol 300 | 1,800 | 1,080 | 40,0 |
| **25** | 2 % Retamyl® AP/0,125 % Giluton® N 1100/28 + 0,4 % Polyglykol 300 | 1,800 | 1,095 | 39,2 |

### Beispiele 26 - 29

Analog zur Arbeitsweise der Bsp. 2 - 7 wurden Klebemitteldisperisonen bei 40 °C aus der anionischen Stärke Retamyl® AP und dem kationischen Polymerisat Praestafix® HH hergestellt, wobei Fraktionen mit bestimmter Korngröße der Stärkepartikel im Bereich von über 200 µm bis unter 63 µm verwendet wurden. Die Angaben zur Zusammensetzung der Klebemitteldispersion in Gew.% beziehen sich auf die Trockenmasse des Faserstoffs. Nach der Arbeitsweise der Bsp. 2 - 7 wurden mit diesen Klebemitteldisperisonen zweilagige Blätter erzeugt und deren Schichtfestigkeit gemessen. Die Daten sind in Tabelle 7 zusammengefaßt.

**Tabelle 7**

| **Bsp.** | | 23 °C N/cm | nach 30 min bei 130 °C N/cm |
|---|---|---|---|
| **26** | 2 % Retamyl® AP > 200 µm/0,125 % Praestafix® HH | 1,360 | 1,135 |
| **27** | 2 % Retamyl® AP > 100 µm/0,125 % Praestafix® HH | 1,625 | 1,105 |
| **28** | 2 % Retamyl® AP > 63 µm/0,125 % Praestafix® HH | 1,935 | 1,240 |
| **29** | 2 % Retamyl® AP < 63 µm/0,125 % Praestafix® HH | 1,665 | 1,040 |

Verbesserte Schichtfestigkeitswerte werden mit den erfindungsgemäßen Klebemitteldispersionen erreicht, wenn als Komponente A) die anionische Stärke mit einer Teilchengröße im Bereich von 50 - 200 µm, vorzugsweise 50 - 100 µm verwendet wird.

## Patentansprüche

1. Wässrige Klebemitteldispersionen bestehend aus
A) 0,1 - 10 Gew.%, bezogen auf das Gesamtgewicht der Dispersion, eines klebefähigen Polymeren in dispergierter Form,
B) 0,1 - 100 Gew-Teile, bezogen auf 100 Gew-Teile der Komponente A), eines anionischen oder kationischen Polyelektrolyten, und
C) 0 - 50 Gew.-Teile, bezogen auf 100 Gew.-Teile der Komponente A), wenigstens eines Polyalkylenglykols mit einer Molmasse im Bereich von 200 - 100 000 g/mol und gegebenenfalls andere Additive.

2. Klebemitteldispersionen nach Anspruch 1, **dadurch gekennzeichnet, daß** sie 2 - 6 Gew.% der Komponente A), bezogen auf das Gesamtgewicht der Dispersion, und 0,1 - 20 Gew.-Teile der Komponente B), bezogen auf 100 Gew.-Teile der Komponente A), enthalten.

3. Klebemitteldispersionen nach Anspruch 1 oder 2, **dadurch gekennzeichnet, daß** sie 0,1 - 30 Gew.-Teile, bevorzugt 0,1 - 20 Gew.-Teile, bezogen auf 100 Gew.-Teile der Komponente A), wenigstens eines Polyalkylenglykols enthalten.

4. Klebemitteldispersionen nach einem der Ansprüche 1 bis 3, **dadurch gekennzeichnet, daß** als Komponente A), wenigstens ein natürliches oder synthetisches Polymeres, vorzugsweise ein Polysaccharid, ein modifiziertes Polysaccharid, ein Protein und/oder ein Polyvinylalkohol verwendet wird.

5. Klebemitteldispersionen nach Anspruch 4, **dadurch gekennzeichnet, daß** als Komponente A), native Stärke, modifizierte Stärke, Celluloseether, Guarmehl, Alginate, Proteine und/oder Polyvinylalkohol verwendet wird.

6. Klebemitteldispersionen nach Anspruch 5, **dadurch gekennzeichnet, daß** als Komponente A) kationische oder anionische Stärke eingesetzt wird.

7. Klebemitteldispersionen nach einem oder mehreren Ansprüchen 1 bis 6, **dadurch gekennzeichnet, daß** ais Komponente C) wenigstens ein Polyethylenglykol verwendet wird.

8. Klebemitteldospersionen nach einem oder mehreren Ansprüchen 1 bis 7, **dadurch gekennzeichnet, daß** die Komponente B) unterhalb der Verkleisterungstemperatur der Komponente A) nicht als Flockungsmittel wirkt.

9. Klebemitteldispersionen nach einem oder mehreren Ansprüchen 1 bis 8, **dadurch gekennzeichnet, daß** als Komponente B) wenigstens ein wasserlösliches oder wasserquellbares kationisches oder anionisches synthetisches Homo- oder Copolymerisat von monoethylenisch ungesättigten Monomeren mit Säuregruppen, die zumindest teilweise als Salze sowie als Ester oder Amide von Dialkylaminoalkylalkanolen oder -aminen in protonierter oder quaternierter Form vorliegen, und ggf. weiteren monoethylenisch ungesättigten Monomeren, Mannichbasen von acrylamidhaltigen Polymerisaten, Polyvinylamine, Polyamine und Polyalkylenpolyamine mit Molmassen von 450 - 100 000 g/mol, Melamin-Formaldehyd-Kondensationsprodukte, Harnstoff-Formaldehyd-Kondensationsprodukte in anionischer und kationischer Modifizierung oder Polyamidoamin-Epichlorhydrin-Harze oder deren Mischungen verwendet werden.

10. Klebemitteldispersionen nach Anspruch 9, **dadurch gekennzeichnet, daß** als - monoethylenisch ungesättigte säuregruppenenthaltende Monomere Acrylsäure, Methacrylsäure, Maleinsäure, Itaconsäure, Crotonsäure und Vinylsulfonsäure, (Meth)Acrylamido-alkylsulfonsäure, vorzugsweise 2-Acrylamido-2-methylpropansulfonsäure, 2-Sulfoethylmethacrylat, Styrolsulfonsäure, Vinylphosphonsäure und/oder Styrolphosphonsäure sowie deren Alkali- oder Ammoniumsalze als wiederkehrende Einheiten in den anionischen Homo- oder Copolymerisate und (Meth)acrylsäureester mit Dialkylaminoalkylalkanolen oder (Meth)acrylsäureamide mit Dialkylaminoalkylaminen in protonierter oder quarternierter Form als wiederkehrende Einheiten in den kationischen Homo- oder Copolymerisate vorhanden sind.

11. Klebemitteldispersionen nach einem oder mehreren Ansprüchen 1 bis 10, **dadurch gekennzeichnet, daß** die Komponente A) und die Komponente B) unterschiedliche Ionogenität aufweisen.

12. Verfahren zur Herstellung von mehrlagigem Papier oder einem aus Papierstoff bestehenden flächigen, aus mindestens 2 Papierbahnen gebildeten Werkstoff, in dem man auf mindestens eine Papierbahn im nassen Zustand eine wässrige Klebemitteldispersion aufbringt, die vereinigten Papierbahnen verpreßt und trocknet, **dadurch gekennzeichnet, daß** als Klebemitteldispersion eine Dispersion nach einem oder mehreren der Ansprüche 1 bis 11 verwendet wird.

13. Verfahren nach Anspruch 12, **dadurch gekennzeichnet, daß** die Klebedispersion auf mindestens eine Papierbahn aufgesprüht wird.

## Claims

1. Aqueous adhesive dispersions comprising,
A) 0.1 - 10 % by weight, relative to the total weight of the dispersion, of an adhesive polymer in dispersed form,
B) 0.1 - 100 parts by weight, relative to 100 parts by weight of component A), of an anionic or cationic polyelectrolyte, and
C) 0 - 50 parts by weight, relative to 100 parts by weight of component A), of at least one polyalkylene glycol with a molar mass in the range of 200 - 100,000 g/mol and optionally other additives.

2. Adhesive dispersions according to Claim 1, **characterised in that** they contain 2 - 6 % by weight of component A), relative to the total weight of the dispersion, and 0.1 - 20 parts by weight of component B), relative to 100 parts by weight of component A).

3. Adhesive dispersions according to Claim 1 or 2, **characterised in that** they contain 0.1 - 30 parts by weight, preferably 0.1 - 20 parts by weight, relative to 100 parts by weight of component A), of at least one polyalkylene glycol.

4. Adhesive dispersions according to one of Claims 1 to 3, **characterised in that** at least one natural or synthetic polymer, preferably a polysaccharide, a modified polysachharide, a protein and/or a polyvinyl alcohol is used as component A).

5. Adhesive dispersions according to Claim 4, **characterised in that** native starch, modified starch, cellulose ethers, guar flour, alginates, proteins and/or polyvinyl alcohol are used as component A).

6. Adhesive dispersions according to Claim 5, **characterised in that** cationic or anionic starch is used as component A).

7. Adhesive dispersions according to one or more of Claims 1 to 6, **characterised in that** at least one polyethylene glycol is used as component C).

8. Adhesive dispersions according to one or more of Claims 1 to 7, **characterised in that** component B) does not act as a flocculant below the gelatinisation temperature of component A).

9. Adhesive dispersions according to one or more of Claims 1 to 8, **characterised in that** at least one water- soluble or water-swellable cationic or anionic synthetic homo- or copolymer of monoethylenically unsaturated monomers with acid groups, at least some of which are present as salts and as esters or amides of dialkylamino alkylalkanols or -amines in protonated or quaternised form, and optionally further monoethylenically unsaturated monomers, Mannich bases of polymers containing acrylamide, polyvinylamines, polyamines and polyalkylene polyamines with molar masses of 450 - 100,000g/mol, melamine-formaldehyde condensation products, urea-formaldehyde condensation products in anionic and cationic modification or polyamidoamine-epichlorohhydrin resins or their mixtures are used as component B).

10. Adhesive dispersions according to Claim 9, **characterised in that**, as monoethylenically unsaturated monomers containing acid groups, acrylic acid, methacrylic acid, maleic acid, itaconic acid, crotonic acid, and vinylsulfonic acid, (meth)acrylamidoalkanesulfonic acids, preferably 2-acrylamido-2-methylpropanesulfonic acid, 2-sulfoethyl methacrylate, styrenesulfonic acid, vinylphosphonic acid, and/or styrenephosphonic acid, as well as their alkali or ammonium salts are present as recurring units in the anionic homo- or copolymers, and (meth)acrylic acid esters with dialkylamino alkylalkanols or (meth)acrylic acid amides with dialkylamino alkylamines in protonated or quaternized form are present as recurring units in the cationic homo- or copolymers.

11. Adhesive dispersions according to one or more of Claims 1 to 10, **characterised** that component A) and component B) have a different ionogenicity.

12. A process for manufacturing multi-layered paper or a sheet material which is made from paper stock and formed by at least 2 paper webs, in which an aqueous adhesive dispersion is applied to at least one paper web in a wet condition, and the combined paper webs are compressed and dried, **characterised in that** a dispersion according to one or more of Claims 1 to 11 is used as the adhesive dispersion.

13. A process according to Claim 12, **characterised in that** the adhesive dispersion is sprayed onto at least one paper web.

## Revendications

1. Dispersions aqueuses de colle, consistant en
A) 0,1 à 10 % en poids, rapportés au poids total de la dispersion, d'un polymère adhésif sous forme dispersée,
B) 0,1 à 100 % en poids, rapportés à 100 % en poids du composant A), d'un polyélectolyte anionique ou cationique
C) 0 à 50 % en poids, rapportés à 100 % en poids du composant A), d'au moins un polyalkylène glycol avec une masse molaire dans l'intervalle de 200 à 100 000 g/mol et, le cas échéant, d'autres additifs.

2. Dispersions aqueuses de colle selon la revendication 1, **caractérisées en ce qu'**elles contiennent 2 à 6 % en poids du composant A), rapportés au poids total de la dispersion, et 0,1 à 20 % en poids du composant B), rapportés à 100 % en poids du composant A).

3. Dispersions aqueuses de colle selon la revendication 1 ou 2, **caractérisées en ce qu'**elles contiennent 0,1 à 30 % en poids, de préférence 0,1 à 20 % en poids, rapportés à 100 % en poids du composant A), d'au moins un polyalkylène glycol.

4. Dispersions aqueuses de colle selon l'une des revendications 1 à 3, **caractérisées en ce que**, comme composant A), au moins un polymère naturel ou synthétique, de préférence un polysaccharide, un polysaccharide modifié, une protéine et/ou un alcool polyvinylique est utilisé.

5. Dispersions aqueuses de colle selon la revendication 4, **caractérisées en ce que**, comme composant A), de l'amidon natif, de l'amidon modifié, un éther de cellulose, de la farine de guar, des alginates, des protéines et/ou de l'alcool polyvinylique sont utilisés.

6. Dispersions aqueuses de colle selon la revendication 5, **caractérisées en ce que**, comme composant A), de l'amidon cationique ou anionique est utilisé.

7. Dispersions aqueuses de colle selon l'une ou plusieurs des revendications 1 à 6, **caractérisées en ce que**, comme composant C), au moins un polyéthylène glycol est utilisé.

8. Dispersions aqueuses de colle selon l'une ou plusieurs des revendications 1 à 7, **caractérisées en ce que** le composant B n'agit pas comme floculant en dessous de la température de transformation en colle du composant A).

9. Dispersions aqueuses de colle selon l'une ou plusieurs des revendications 1 à 8, **caractérisées en ce que** sont utilisés, comme composant B), au moins un homo- ou un copolymère cationique ou anionique soluble dans l'eau ou gonflable dans l'eau de monomères insaturés monoéthyléniques avec des groupes acides, qui se présentent au moins en partie comme sels, ainsi que comme esters ou amides de dialkylaminoalkylalcanols ou -amines, sous forme protonée ou quaternaire et, le cas échéant, d'autres monomères insaturés monoéthyléniques, des bases de Mannich de polymères contenant de l'acrylamide, des amines polyvinyliques, des polyamines et des polyalkylènepolyamines avec des masses molaires de 450 à 100 000 g/mol, des produits de condensation mélamine-formaldéhyde, des produits de condensation urée-formaldéhyde en modification anionique et cationique ou des résines polyamidoamine-épichlorhydrine, ou leurs mélanges.

10. Dispersions aqueuses de colle selon la revendication 9, **caractérisées en ce qu'**il y a, comme monomères insaturés monoéthyléniques contenant des groupes acides, de l'acide acrylique, de l'acide méthacrylique, de l'acide maléique, de l'acide itaconique, de l'acide crotonique et de l'acide vinylsulfonique, de l'acide (méth)acrylamido-alkylsulfonique, de préférence de l'acide 2-acrylamido-2-méthylpropanesulfonique, du 2-sulfoéthylméthacrylate, de l'acide styrènesulfonique, de l'acide vinylphosphonique et/ou de l'acide styrènephosphonique, de même que leurs sels alcalins ou ammoniacaux comme unités périodiques dans les homo- ou copolymères anioniques, et des esters d'acide (méth)acrylique avec des dialkylaminoalkylalcanols ou des amides d'acide (méth)acrylique avec des dialkylaminoalkylamines, sous forme protonée ou quaternaire comme unités périodiques dans les homo- ou copolymères cationiques.

11. Dispersions aqueuses de colle selon l'une ou plusieurs des revendications 1 à 10, **caractérisées en ce que** le composant A) et le composant B) présentent des caractères ionogènes différents.

12. Procédé de production de papier multicouche ou d'un matériau bidimensionnel consistant en pâte à papier formé d'au moins 2 feuilles de papier, dans lequel on applique à l'état humide sur au moins une feuille de papier une dispersion de colle, que l'on presse ensemble et que l'on sèche les feuilles de papier réunies, **caractérisé en ce que**, comme dispersion de colle, on utilise une dispersion selon une ou plusieurs des revendications 1 à 11.

13. Procédé selon la revendication 12, **caractérisé en ce que** la dispersion de colle est appliquée par pulvérisation sur au moins une feuille de papier.
